# EUROPEAN PATENT APPLICATION

(11) **EP 4 513 281 A1**
(43) Date of publication of application: **26.02.2025**
(21) Application number: 23193580.0
(22) Date of filing: 25.08.2023
(51) Int. Cl.: G05B 13/02, B08B 13/00

(54) **METHOD AND SYSTEM FOR CONTROL OF CLEAN-IN-PLACE PROCESS IN AND INDUSTRIAL PLANT**

(71) Applicant: Siemens Aktiengesellschaft, 80333 München (DE)
(72) Inventor: MORABADA, Sachin, 560062 Bengaluru (IN); P, Srinivasan, 636705 Dharmapuri, Tamil Nadu (IN); S M, Sainath, 560043 Bangalore (IN)
(74) Representative: Isarpatent

(57) **Abstract**

The present invention provides a method and system for controlling a clean-in-place process in an industrial plant (106). The method comprises receiving a first set of input parameters associated with a clean-in-place process in the industrial plant (106). The method further comprises analyzing the first set of input parameters by application of a plurality of machine learning models on the first set of input parameters. The method further comprises generating a plurality of confidence scores for the plurality of machine learning models. The method further comprises determining at least one machine learning model from the plurality of machine learning models based on the generated plurality of confidence scores. The method further comprises controlling the clean-in-place process in the industrial plant based on the second set of input parameters to optimize the cleaning-in-place process.

## Description

The present invention relates to a field of industrial automation, and more particularly relates to a method and system for controlling a clean-in-place process in an industrial plant.

An industrial plant comprises a plurality of machine parts which function together to achieve an objective. Examples of the plurality of machine parts includes but is not limited to valves, containers, sensors, agitators, vortex breakers, nozzles, fittings, positioners, vessels, and pipes. In industries such as chemical, pharmaceutical, food, and beverage industries, the plurality of machine parts are used to carry a large variety of chemicals. In some examples, a single machine part is used to handle different types of chemicals, one after the other. Thus, to avoid contamination between chemicals, the machine part has to be cleaned properly before each use. Furthermore, cleanliness of the machine part is to be validated before each use of the machine part.

A Clean-in-place (CIP) process is a vital process in food, beverage and pharmaceutical industries which involves cleaning the plurality of machine parts in the industrial plant without having to disassemble the plurality of machine parts. On an average, a food and beverage plant (such as dairy) allocate 20% of daily operations for the CIP process. Furthermore, 15% of total energy consumed by the industrial plant is used for the CIP process.

Conventional clean-in-place processes have several problems. In one example, the conventional clean-in-place processes use cleaning agents and water in an inefficient manner. Inefficient use of the cleaning agents and water in a clean-in-place process result in an increase in an operating cost and an environmental impact of the clean-in-place process. Furthermore, the clean-in-place process may have inconsistent cleaning results, which can impact product quality and safety. Furthermore, the clean-in-place process may have long cleaning cycle times, thus reducing equipment uptime and productivity.

In light of above, there exists a need for an efficient and cost effective method and system for controlling the clean-in-place process in an industrial plant. Therefore, it is an object of the present invention to provide a method and system for controlling clean-in-place process in an industrial plant.

The object of the invention is achieved by a method of controlling a clean-in-place process in an industrial plant. The industrial plant comprises a plurality of machine parts which function together to achieve an objective. Examples of the plurality of machine parts includes but is not limited to valves, containers, sensors, agitators, vortex breakers, nozzles, fittings, positioners, and pipes. The industrial plants are of a plurality of types such as a chemical industrial plant and a pharmaceutical industrial plant. Each of the plurality of machine parts handles a variety of substances such as industrial chemicals, food materials, and pharmceutical substances.

The Clean-In-Place (CIP) process is a process utilized in an industrial plant to clean the plurality of machine parts effectively without disassembly of any portion of the industrial plant. The clean-in-place process involves a plurality of steps. The plurality of steps include a pre-rinse step, a cleaning step, water rinse step, an acid cleaning step, a caustic agent cleaning step, and a hot water flushing step. A final rinse using purified water or steam ensures thorough cleansing.

The clean-in-place process utilizes a plurality of inputs and generates a plurality of outputs. The plurality of inputs includes the plurality of machine parts, cleaning water, cleaning chemicals, electricity, and instructions associated with one or more cleaning cycles as input. The plurality of outputs comprises one or more key performance indicators associated with the clean-in-process, such as cleanliness of the plurality of machine parts after the clean-in-place process, completion time of the clean-in-place process, and wastewater generated from the clean-in-place process.

The clean-in-place process is further associated with a plurality of input parameters and a plurality of output parameters. The plurality of input parameters comprises information associated with the plurality of inputs received by the clean-in-place process. For example, the plurality of input parameters associated with the clean-in-place process includes a time duration of the clean-in-place process. In one example, the plurality of input parameters associated with the clean-in-place process further includes a temperature of chemicals used in the clean-in-place process. The plurality of input parameters associated with the clean-in-place process further includes an amount of titer used during execution of the clean-in-place process. The plurality of input parameters associated with the clean-in-place process further includes an Acid / Alkali concentration of cleaning agent used in the clean-in-place process. The plurality of input parameters associated with the clean-in-place process further includes a Speed (Turbulence of jet) of cleaning water used in the clean-in-place process. The plurality of input parameters further comprises a return conductivity, an amount of chemicals drained during the cleaning-in-place process, and an amount of microbial waste present in the plurality of machine parts.

Furthermore, the plurality of input parameters comprises parameters associated with one or more initial conditions associated with the cleaning-in-place process. For example, the plurality of input parameters comprises information associated with the initial condition of the plurality of machine parts, for example, an amount of dirt on the plurality of machine parts. The plurality of input parameters further comprises information associated with a chemical product which is processed or manufactured in the industrial plant. For example, the plurality of input parameters comprises information associated with a ph level of the chemical product. Examples of the chemical products include but is not limited to sulphuric acid, pasteurized and condensed milk, and probiotic medicines.

The plurality of output parameters comprises information associated with the plurality of outputs generated by the clean-ion-place process. In other words, the plurality of output parameters comprises information associated with one or more key performance indicators of the clean-in-place process. For example, the plurality of output parameters comprises information associated with an amount of Water consumed in the clean-in-place process executed in the industrial plant. The plurality of output parameters further comprises an amount of water reused in the clean-in-place process. The plurality of output parameters further comprises an amount of Megajoules (MJ) of energy consumed in the clean-in-place process. The plurality of output parameters comprises an amount of wastewater generated in the clean-in-place process. The plurality of output parameters comprises an amount of chemicals used in the clean-in-place process.

In a preferred embodiment, the method comprises training, by the processing unit, each machine learning model of the plurality of machine learning models based on information associated with a plurality of input parameters and a plurality of output parameters of a plurality of cleaning-in-place processes in the industrial plant. Each machine learning model of the plurality of machine learning models are trained in accordance with one or more user preferences.

In one example, the one or more user preferences is to train the plurality of machine learning models to modify the plurality of input parameters so that the clean-in-place process generates an optimum value of the plurality of output parameters. To train each machine learning model, the processing unit is configured to generate a training data set and a testing data set from the plurality of input parameters and the plurality of output parameters. The training data set and the testing data set are generated based on one or more user input received from a user. The one or more user inputs are indicative of user preferences to assign specific input paramters and output parameters into the training dataset and the testing dataset. Advantageously, the user is enabled to select optimal values of input parameters and output parameters from the plurality of input parameters and the output parameters. Thus, the user is enabled to train the plurality of machine learning models to optimize the plurality of input parameters and the plurality of output parameters.

Furthermore, the processing unit is configured to select a type from a plurality of types of machine learning models. Examples of the plurality of types of machine learning models include, but is not limited to a Linear Regression model, a Random Forest model, or a Gradient Boosting model.

The processing unit is further configured to train each of the plurality of machine learning models by application of a learning algorithm on the training data. Examples of the learning algorithms include supervised learning algorithm and unsupervised learning algorithm. The processing unit is further configured to test each of the plurality of machine learning algorithms by application of a evaluation algorithm using the testing data. Examples of the evaluation algorithms include, but is not limited to Mean Squared Error algorithm (MSE), Root Mean Squared Error algorithm (RMSE), and Mean Absolute Error algorithm (MAE). The processing unit is further configured to receive one or more input from a plurality of users. The received one or more input is indicative of user preferences to tune one or more hyper parameters of the plurality of machine learning algorithms. The processing unit is configured to tune the hyperparameters based on the received user inputs. The processing unit is configured to tune the hyperparameters based on at least one of a grid search algorithm, random search algorithm, or Bayesian optimization algorithm.

Each clean-in-place process of the plurality of clean-in-place processes is associated with a specific chemical substance of a plurality of chemical substances. In one example, each clean-in-place process of the plurality of clean-in-place processes is configured to eradicate traces of the specific chemical substance from one or more machine parts of the plurality of machine parts.

Each machine learning model of the plurality of machine learning models is configured to modify one or more input parameters of the plurality of input parameters of the clean-in-place process. The one or more input parameters are modified such that one or more output parameters of the plurality of output parameters of the clean-in-process are optimized. In one example, each machine learning model of the plurality of machine learning models are trained based on one or more user preferences. In one example, each machine learning model of the plurality of machine learning models is trained by application of a supervised learning algorithm on the plurality of input parameters and the plurality of output parameters. Thus, each machine learning algorithm of the plurality of machine learning models is configured to determine an interrelationship between the plurality of input parameters and the plurality of output parameters.

Each machine learning model of the plurality of machine learning models is at least one of a convoluted neural network and a deep neural network. Each machine learning model of the plurality of machine learning models has different levels of accuracy for different values of the plurality of input parameters. Furthermore, a confidence score of each machine learning model of the plurality of machine learning model is dependent on values of the plurality of input parameters. Thus, a confidence score of a first machine learning model of the plurality of machine learning model is different from a confidence score of the second machine learning model of the plurality of machine learning models.

In a preferred embodiment, the method further comprises receiving, by the processing unit, a first set of input parameters associated with a clean-in-place process in the industrial plant. The first set of input parameters comprises an amount of water used in the clean-in-place process, and a number of cleaning cycles in the clean-in-place process.

In a preferred embodiment, the method comprises analyzing, by the processing unit, the first set of input parameters by application of the plurality of machine learning models on the first set of input parameters. The plurality of machine learning models is configured to analyze the first set of input parameters to generate a plurality of sets of input parameters. Each machine learning models of the plurality of machine learning models is configured to modify one or one or more input parameters of the first set of input parameters in a manner which is specific to the respective machine learning model. In otherwords, the plurality of machine learning models creates a plurality of sets of input parameters by analyzing the first set of input parameters.

In a preferred embodiment, the method comprises generating, by the processing unit, a plurality of confidence scores for the plurality of machine learning models. Each confidence score of the plurality of confidence scores is associated with a specific machine learning model of the plurality of machine learning models. In one example, the method comprises ranking, by the processing unit, the plurality of machine learning models in a decreasing order of confidence scores by application of a sorting algorithm on the plurality of confidence scores and the plurality of machine learning models. Examples of the sorting algorithms include binary sorting algorithms and tree sorting algorithms. Furthermore, the processing unit is configured to select at least one machine learning model which has a higher rank than other machine learning models of the plurality of machine learning models.

In another example, the method further comprises determining, by the processing unit, a highest confidence score among the plurality of confidence scores generated by the plurality of machine learning models based on the appplication of the sorting algorithm. In the preferred embodiment, the method further comprises selecting, by the processing unit, the at least one machine learning model from the plurality of machine learning model. The selected at least one machine learning model is associated with the determined highest confidence score.

In a preferred embodiment, the method further comprises generating, by the processing unit, a second set of input parameters for the clean-in-place process based on application of the determined at least one machine learning model on the first set of input parameters. It is noted that the at least one machine learning model is configured to optimize the first set of input parameters. The second set of input parameters comprises an optimised version of the first set of input parameters. In another example, the at least one machine learning module is configured to modify the first set of input parameters based on one or more user preferences. In one example, the one or more user preferences comprises a user input which indicative of increasing one or more input parameters of the first set of input parameters. In such a case, the at least one machine learning models is configured to increase the one or more parameters of the first set of input parameters to generate the second set of input parameters. In otherwords, the at least one machine learning model is configured to modify one or more parameters of the first set of input parameters to generate the second set of input parameters.

In one example, the processing unit is configured to receive a user selection which is indicative of the one or more parameters, of the first set of input parameters, which are to be modified by the at least one machine learning algorithm. In such a case, the at least one machine learning model is configured to modify the user selected one or more parameters of the first set of input parameters to generate the second set of input parameters.

In the preferred embodiment, the method further comprises displaying, by the processing unit, the second set of input parameters to a user. In one example, the processing unit is configured to display the second set of input parameters on a display device such as a human machine interface or a smart phone.

In the preferred embodiment, the method further comprises simulating, by the processing unit, the cleaning-in-place process in a simulator based on the first set of input parameters to generate a first simulation instance. Examples of the simulators includes but is not limited to ASPEN plus, MATLAB, or a user generated simulation tool for simulating the cleaning-in-place process. The simulator is designed by a user to simulate execution of the clean-in-place process in a virtual space. The first simulation instance comprises information about the first set of input parameters and a first set of simulated output parameters. The first set of simulated output parameters is indicative of predicted values of a plurality of outputs of the clean-in-place process if the clean-in-place process is operated with the first set of input parameters.

In other words, the method further comprises generating, by the processing unit, a first set of simulated output parameters based on the first simulation instance. In one example, the first set of simulated output parameters comprises information about a predicted value of an amount of Megajoules (MJ) of energy consumed in the clean-in place process, when the clean-in-place process is executed according to the first set of input parameters. In another example, the first set of simulated output parameters comprises information about a predicted value of an amount of Water consumed in the clean-in-place process, when the clean-in-place process is executed according to the first set of input parameters. In another example, the first set of simulated output parameters comprises information about a predicted value of an amount of wastewater generated in the clean-in-place process, when the clean-in-place process is executed according to the first set of input parameters.

In the preferred embodiment, the method further comprises simulating, by the processing unit, the cleaning-in-place process in a simulator based on the second set of input parameters to generate a second simulation instance. The second simulation instance comprises information about the second set of input parameters and a second set of simulated output parameters. The second set of simulated output parameters is indicative of predicted values of a plurality of outputs of the clean-in-place process if the clean-in-place process is operated with the second set of input parameters.

In other words, the method further comprises generating, by the processing unit, a second set of simulated output parameters based on the second simulation instance. In the preferred embodiment, the method further comprises determining, by the processing unit, a difference between the first set of simulated output parameters and the second set of simulated output parameters. In the preferred embodiment, the method further comprises displaying, by the processing unit, the determined difference in an output device. In one example, the output device is at least one of a human machine interface or a smart phone.

In the preferred embodiment, the method further comprises controlling, by the processing unit, the clean-in-place process in the industrial plant based on the second set of input parameters to optimize the cleaning-in-place process. In one example, the clean-in-place process is controlled by adjusting, by the processing unit, a plurality of input parameters of the clean-in-place process, from a value indicated by the first set of input parameters, to a value indicated by the second set of input parameters. The processing unit is configured to control the clean-in-place process by use of an industrial control system such as a distributed control system. In one example, the first set of input parameters and the second set of input parameters comprises a parameter which is indicative of water used in the clean-in-place process. A value of the parameters in the first set of input parameters is 30 liters. A value of the parameter in the second set of input parameters is 15 liters. In such a case, the processing unit is configured to reduce the parameter of the clean-in-place process from 30 liters to 15 liters.

In the preferred embodiment, the method further comprises receiving from a server, by the processing unit, a set of output parameters associated with the controlled clean-in-place process in the industrial plant. In the preferred embodiment, the method further comprises comparing, by the processing unit, the second set of simulated output parameters with the set of output parameters. In the preferred embodiment, the method further comprises determining, by the processing unit, a difference between the second set of simulated output parameters and the set of output parameters based on the comparison. In the preferred embodiment, the method further comprises displaying, by the processing unit, the determined difference in an output device.

In the preferred embodiment, the method further comprises receiving, by the processing unit, a user input from a user. The user input is indicative of a user selected machine learning model of the plurality of machine learning models. In the preferred embodiment, the method further comprises generating, by the processing unit, a third set of input parameters for the clean-in-place process based on application of the user selected machine learning model on the first set of input parameters. In the preferred embodiment, the method further comprises controlling, by the processing unit, the clean-in-place process in the industrial plant based on the third set of input parameters to optimize the cleaning-in-place process.

The object of the present invention is also achieved by an industrial control system for validating cleanliness of a machine part in an industrial plant. The industrial control system comprises a processing unit and a memory coupled to the processing unit. The memory comprises a clean-in-place control modulestored in the form of machine-readable instructions executable by the processor. The clean-in-place control moduleis configured for performing the method as described above.

The object of the present invention is also achieved by an industrial environment. The industrial environment comprising an industrial control system, a industrial plant comprising one or more physical components and a one or more client devicescommunicatively coupled to the industrial control system and the industrial plant. The industrial control system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of controlling a clean-in-place process in an industrial plant, according to an embodiment of the present invention;
- FIG 2: is a block diagram of an industrial control system, such as those shown in FIG. 1, in which an embodiment of the present invention can be implemented;
- FIG 3: is a block diagram of a cleanliness validation module, such as those shown in FIG 2, in which an embodiment of the present invention can be implemented;
- FIG 4A-D: is a process flowchart illustrating an exemplary method of controlling a clean-in-place process in the industrial plant, according to an embodiment of the present invention;

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

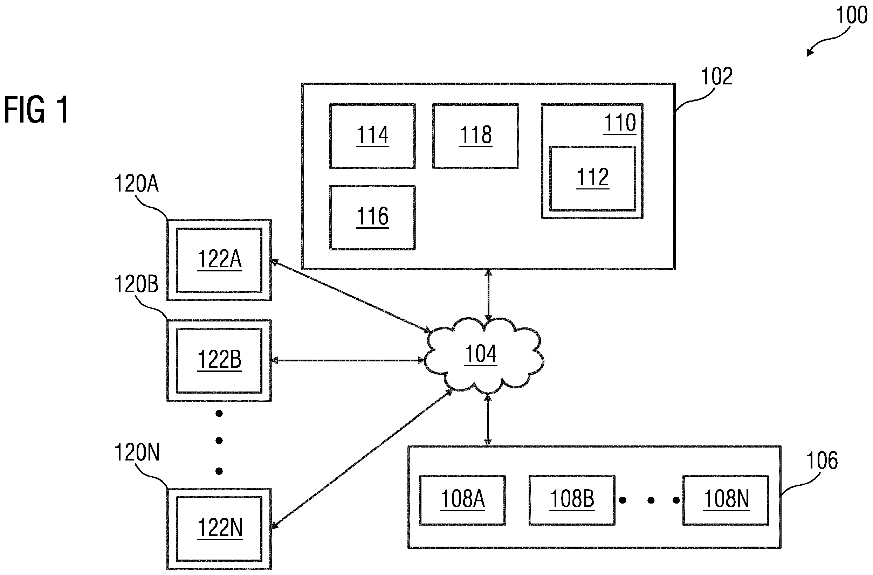

FIG 1 is a block diagram of an industrial environment 100 capable of controlling a clean-in-place process in an industrial plant 106, according to an embodiment of the present invention. In FIG 1, the industrial environment 100 includes an industrial control system 102, the industrial plant 106 and a one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The industrial control system 102 is communicatively connected to the industrial plant 106 via a network connection 104 (such as Local Area Network (LAN), Wide Area Network (WAN), Wi-Fi, Internet, any short range or wide range communication). The industrial control system 102 is also connected to the one or more client devices 120A-N via the network 104.

The industrial plant 106 comprises a plurality of machine parts 108A-N. Examples of the plurality of machine parts 108A-N includes but is not limited to valves, containers, sensors, agitators, vortex breakers, vessels, process lines, nozzles, fittings, positioners, and pipes. In industries such as chemical, pharmaceutical, food, and beverage industries, the plurality of machine parts 108A-N carry a large variety of chemicals. In some examples, a single machine part, such as a vessel, is used to handle different types of chemicals, one after the other. Thus, small amounts of the chemicals handled by the machine part deposits on the machine part. The deposits of the handled chemicals contaminates any other chemical handled by the machine part. Thus, the deposits of the chemicals manifest as dirt on the machine part.

Although, FIG 1 illustrates the industrial control system 102 connected to one industrial plant 106, one skilled in the art can envision that the industrial control system 102 can be connected to several industrial plants located at different geographical locations via the network connection 104.

The industrial control system 102 may be a standalone server deployed at a control station or may be a remote server on a cloud computing platform or an edge computing based platform. In a preferred embodiment, the industrial control system 102 may be a cloud-based industrial control system or an edge platform based industrial control system. The industrial control system 102 is capable of delivering applications (such as cloud applications) for controlling a clean-in-place process used to clean the plurality of machine parts 108A-N. The industrial control system 102 may comprise a digitalization platform 110 (such as a cloud computing platform or an EDGE computing platform), a clean-in-place control module 112, a server 114 including hardware resources and an operating system (OS), a network interface 116 and a database 118. The network interface 116 enables communication between the industrial control system 102, the industrial plant 106, the one or more client devices120A-N, and the plurality of machine parts 108A-N. In one example, the clean-in-place control module 112 is implemented as an edge application in one or more edge devices in the industrial environment 100.

The one or more client devices 120A-N may be a desktop computer, laptop computer, tablet, smart phone and the like. Each of the one or more client devices 120A-N is provided with an user inteface 122A-N for controlling the industrial control system 102. The one or more client devices 120A-N can access the industrial control system 102 for controlling oen or more clean-in-place processes running in the industrial plant 106. The one or more client devices 120A-N can access cloud applications. Throughout the specification, the terms "human machine interface", "client device" and "user device" are used interchangeably. The one or more client devices 120A-N are further configured to receive a plurality of user actions from a plurality of users. The plurality of user actions comprises user inputs, user commands, user gestures, programming instructions, and user passwords.

In one example, the one or more client devices 120A-N comprises a plurality of edge devices which form an edge computing platform in which the clean-in-place control module 112 is implemented. The clean-in-place control module 112 is implemented as an edge application runs in the edge computing platform. In one example, the clean-in-place control module 112 is dockerized with multi-model machine learning structured optimization running in the edge platform.

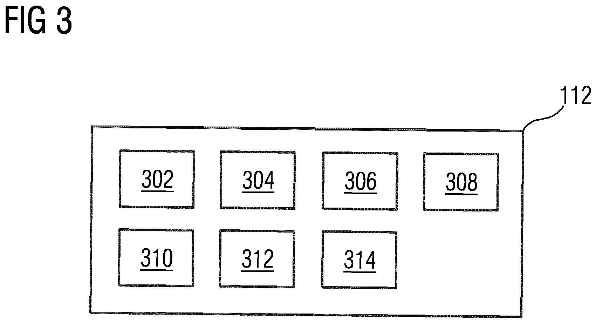

The server 114 may include one or more servers on which the OS is installed. The server 114 may comprise one or more processors, one or more storage devices, such as, memory units, for storing data and machine-readable instructions for example, applications and application programming interfaces (APIs), and other peripherals required for providing computing (such as cloud computing) functionality. In one example, the digitalization platform 110 may be implemented in the server 114. The digitalization platform 110 enables functionalities such as data reception, data processing, data rendering, data communication, etc. using the hardware resources and the OS of the server 114 and delivers the aforementioned services using the application programming interfaces deployed therein. The digitalization platform 110 may comprise a combination of dedicated hardware and software built on top of the hardware and the OS. In an exemplary embodiment, the digitalization platform 110 may correspond to an Integrated Development Environment (IDE) comprising program editors and compilers which allow the users of the one or more client devices 120A-N to control one or more clean-in-place processes in the indsutrial plant 106. The digitalization platform 110 may further comprise the clean-in-place control module 112 configured for controlling a clean-in-place processes running on the plurality of machine parts 108A-N. Details of the clean-in-place control module 112 is explained in FIG. 3.

The database 118 stores the information relating to the industrial plant 106, the plurality of machine parts 108A-N, the one or more client devices120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the digitalization platform 110. The database 118, according to another embodiment of the present invention, is a location on a file system directly accessible by the clean-in-place control module 112.

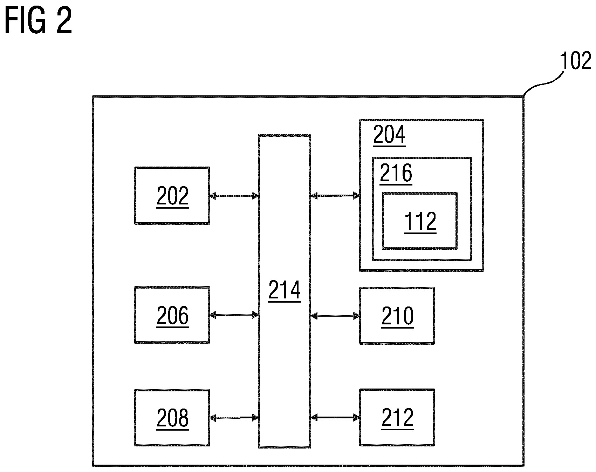

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, a neural processing unit (NPU) or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the clean-in-place control module 112 stored in the form of machine-readable instructions on any of the above-mentioned storage media and may be in communication with and executed by the processor(s) 202.

Examples of the plurality of machine parts 108A-N further includes but is not limited to valves, containers, sensors, agitators, vortex breakers, nozzles, fittings, positioners, and pipes. The industrial plant 106 is of a plurality of types such as a chemical industrial plant and a pharmaceutical industrial plant. Each of the plurality of machine parts 108A-N handles a variety of substances such as industrial chemicals, food materials, and pharmceutical substances.

A Clean-In-Place (CIP) process is a process utilized in the industrial plant 106 to clean the plurality of machine parts 108A-N effectively without disassembly of any portion of the industrial plant 106. In food, beverages, and pharmaceutical industries, the plurality of machine parts 108A-N further includes process lines and vessels used to carry chemicals in the industrial plant 106. The clean-in-place process ensures removal of food soiling, organic residues, protein, mineral sedimentation, microbial residues and dairy fouling in the plurality of machine parts 108A-N of the industrial plant 106. In food and beverages industry, the clean-in-place process prevents food contamination. Furthermore, the clean-in-place process improves a quality and consistency of one or more products manufactured in the industrial plant 106.

The clean-in-place process involves a plurality of steps. The plurality of steps include a pre-rinse step, a cleaning step, water rinse step, an acid cleaning step, a caustic agent cleaning step, and a hot water flushing step. A final rinse using purified water or steam ensures thorough cleansing.

The clean-in-place process utilizes a plurality of inputs and generates a plurality of outputs. The plurality of inputs includes the plurality of machine parts, cleaning water, cleaning chemicals, electricity, and instructions associated with one or more cleaning cycles as input. The plurality of outputs comprises cleanliness of the plurality of machine parts 108A-N after the clean-in-place process, completion time of the clean-in-place process, and wastewater generated from the clean-in-place process.

The clean-in-place process is further associated with a plurality of input parameters and a plurality of output parameters. The plurality of input parameters comprises information associated with the plurality of inputs received by the clean-in-place process. For example, the plurality of input parameters associated with the clean-in-place process includes a time duration of the clean-in-place process. In one example, the plurality of input parameters associated with the clean-in-place process further includes a temperature of chemicals and water used in the clean-in-place process. The plurality of input parameters associated with the clean-in-place process further includes an amount of titer used during execution of the clean-in-place process. The plurality of input parameters associated with the clean-in-place process further includes an Acid / Alkali concentration of cleaning agent used in the clean-in-place process. The plurality of input parameters associated with the clean-in-place process further includes a Speed (Turbulence of jet) of cleaning water used in the clean-in-place process. The plurality of input parameters further comprises a return conductivity, an amount of chemicals drained during the cleaning-in-place process, and an amount of microbial waste present in the plurality of machine parts 108A-N. The plurality of input parameters further comprises a time duration of the clean-in-place process.

Furthermore, the plurality of input parameters comprises parameters associated with one or more initial conditions associated with the cleaning-in-place process. For example, the plurality of input parameters comprises information associated with the initial condition of the plurality of machine parts 108A-N, for example, an amount of dirt on the plurality of machine parts. The plurality of input parameters are received from the industrial control system 102. In another example, the plurality of input parameters is received from at least one of a batch control system, a programmable logic controller or a distributed control system.

In yet another example, the plurality of input parameters are received from a plurality of sensors in the industrial plant 106. Examples of the plurality of sensors include, but is not limited to a temperature sensor, a pressure sensor, a flow rate sensors, a pH sensor, and a conductivity sensor. The plurality of input parameters further comprises one or more sensor inputs received from the plurality of sensors. The plurality of input parameters further comprises historical data associated with a plurality of clean-in-place processes that have been executed in the industrial plant 106, in the past. The historical data comprises information associated with a effectiveness of the plurality of clean-in-place processes that have been executed in the industrial plant 106, in the past. Furthermore, the historical data comprises information associated with the plurality of input parameters associated with the plurality of clean-in-place processes executed in the industrial plant 106 in the past. The plurality of input parameters further comprises information associated with an environment of the industrial plant 106. The information associated with the environment of the industrial plant 106 comprises information associated with a weather, a temperature, a humidity, and a location of the environment.

The plurality of output parameters comprises information associated with the plurality of outputs generated by the clean-in-place process. For example, the plurality of output parameters comprises information associated with an amount of Water consumed per clean-in-place process executed in the industrial plant 106. The plurality of output parameters further comprises an amount of water reused in the clean-in-place process. The plurality of output parameters further comprises an amount of Megajoules (MJ) of energy consumed per clean-in place process executed in the industrial plant 106. The plurality of output parameters comprises an amount of wastewater generated in the clean-in-place process. The plurality of output parameters comprises an amount of chemicals used in the clean-in-place process. The plurality of output parameters further comprises a plurality of key performance indicators of the clean-in-place process. Examples of the plurality of key performance indicators of the clean-in-place process includes but is not limited to an amount of water wasted during the clean-in-place process, an amount of energy spent to complete the clean-in-place process, and a time taken to complete the clean-in-place process.

The clean-in-place control module 112 further causes the processing unit 202 to train each machine learning model of the plurality of machine learning models based on information associated with a plurality of input parameters and a plurality of output parameters of a plurality of cleaning-in-place processes in the industrial plant. Each machine learning model of the plurality of machine learning models is trained in accordance with one or more user preferences.

In one example, the one or more user preferences is to train the plurality of machine learning models to modify the plurality of input parameters so that the clean-in-place process generates an optimum value of the plurality of output parameters. To train each machine learning model, the processing unit is configured to generate a training data set and a testing data set from the plurality of input parameters and the plurality of output parameters. The training data set and the testing data set are generated based on one or more user input received from a user. The one or more user inputs are indicative of user preferences to assign specific input paramters and output parameters into the training dataset and the testing dataset. Advantageously, the user is enabled to select optimal values of input parameters and output parameters from the plurality of input parameters and the output parameters. Thus, the user is enabled to train the plurality of machine learning models to optimize the plurality of input parameters and the plurality of output parameters.

Furthermore, the processing unit 202 is configured to select a type from a plurality of types of machine learning models. Examples of the plurality of types of machine learning models include, but is not limited to a Linear Regression model, a Random Forest model, or a Gradient Boosting model.

The processing unit 202 is further configured to train each of the plurality of machine learning models by application of a learning algorithm on the training data and the selected type of the plurality of types of machine learning models. Examples of the learning algorithms include supervised learning algorithm and unsupervised learning algorithm. The processing unit 202 is further configured to test each of the plurality of machine learning algorithms by application of a evaluation algorithm using the testing data. Examples of the evaluation algorithms include, but is not limited to Mean Squared Error algorithm (MSE), Root Mean Squared Error algorithm (RMSE), and Mean Absolute Error algorithm(MAE). The processing unit 202 is further configured to receive one or more input from a plurality of users. The received one or more input is indicative of user preferences to tune one or more hyper parameters of the plurality of machine learning algorithms. The processing unit 202 is configured to tune the hyperparameters based on the received user inputs. The processing unit 202 is configured to tune the hyperparameters based on at least one of a grid search algorithm, random search algorithm, or Bayesian optimization algorithm. Thus, each machine learning model of the plurality of machine learning models is trained by the plurality of users. In another example, the plurality of machine learning models are received from the database 118 by the processing unit 202.

In one example, each machine learning model of the plurality of machine learning models comprises information indicative of an interrelationship between the plurality of input parameters and the plurality of output parameters of the plurality of clean-in-process in the industrial plant 106. Each machine learning model, of the plurality of machine learning models, is configured to predict one or more output parameters of at least one clean-in-place process for a given value of one or more input parameters received by the at least one clean-in-place process. Each machine learning model is further configured to modify one or more input parameters of the at least one clean-in-place process such that the at least one clean-in-place process generates one or more user specified output parameters.

Each clean-in-place process of the plurality of clean-in-place processes is associated with a specific chemical substance of a plurality of chemical substances. In one example, each clean-in-place process of the plurality of clean-in-place processes is configured to eradicate traces of the specific chemical substance from one or more machine parts of the plurality of machine parts. In one example, the plurality of clean-in-place processes are designed by a plurality of users by use of one or more software applications.

In one example, each machine learning model of the plurality of machine learning models is trained by application of a supervised learning algorithm on the plurality of input parameters and the plurality of output parameters. Thus, each machine learning algorithm of the plurality of machine learning models is configured to determine an interrelationship between the plurality of input parameters and the plurality of output parameters.

Each machine learning model of the plurality of machine learning models is at least one of a convoluted neural network and a deep neural network. Each machine learning model of the plurality of machine learning models has different levels of accuracy for different values of the plurality of input parameters. Furthermore, a confidence score of each machine learning model of the plurality of machine learning model is dependent on values of the plurality of input parameters.

In one example, the plurality of input parameters and the plurality of output parameters of each clean-in-place process of the plurality of clean-in-place process comprises information associated with a chemical product manufactured by the industrial plant 106. Examples of the chemical product includes a chemical product, a food product, a beverage product, a biomatter product. A first group of input parameters of the plurality of input parameters comprises information associated with one or more clean-in-place processes associated with a first chemical product. Similarly, a second group of input parameters of the plurality of input parameters comprises information associated with one or more clean-in-place processes associated with a second chemical product.

The clean-in-place control module 112 is configured to train one or more machine learning models of the plurality of machine learning model based on the first group of input parameters associated with the first chemical product. Furthermore, the clean-in-place control module 112 is configured to further train the one or more machine learning models of the plurality of machine learning model based on the second group of input parameters associated with the second chemical product. The clean-in-place control module 112 is configured to train the one or more machine learning module by application of a supervised learning algorithm on the first group and the second group of input parameters. Furthermore, the clean-in-place control module 112 is configured to generate a first group of simulated output parameters and a second group of simulated output parameters. The clean-in-place control module 112 is configured to display the first group of simulated output parameters and the second group of simulated output parameters to a user. The clean-in-place control module 112 is further configured to receive an user input from the user via the one or more client devices 120A-N. The user input is indicative of a user's opinion on whether it is feasible for the one or more machine learning models to optimize a clean-in-place process associated with the first group of input parameters or the second group of input parameters.

In one example, it is feasible for the one or more machine learning models to optimize the clean-in-place process which is executed based on the first group of input parameters. In such a case, the clean-in-place control module 112 is configured to further train the one or more machine learning models with the first group of input parameters associated with the first chemical product. Thus, a confidence score of the one or more machine learning models is increased when the one or more machine learning models is applied on input parameters associated with the first chemical product.

In a case where the one or more machine learning models is feasible with the second group of input parameters then the clean-in-place control module 112 is configured to train the one or more machine learning models with one or more input parameters associated with the second chemical product. Thus, a confidence score of the one or more machine learning models is increased when the one or more machine learning models is applied on input parameters in the second group of input parameters. In other words, each machine learning model of the plurality of machine learning models has a confidence score depending on a type of chemical product which is manufactured in the industrial plant 106. In other words, each of the plurality of machine learning models are trained by the clean-in-place control module 112 by application of a supervised learning algorithm on the plurality of input parameters, the plurality of output parameters associated with the plurality of clean-in-place processes and one or more user inputs.

When executed by the processing unit 202, the clean-in-place control module 112 causes the processing unit 202 to receive a first set of input parameters associated with a clean-in-place process in the industrial plant 106. For example, the first set of input parameters comprises an amount of water used in the clean-in-place process, and a number of cleaning cycles in the clean-in-place process. The first set of input parameters are received by the processing unit 202 from at least one of the plurality of sensors, the database 114, the industrial control system 102, or any batch control systems or any programmable logic controllers. In one example, the plurality of sensors provides real-time live data to the clean-in-place control module 112. Thus the first set of input parameters comprises real time live data associated with the clean-in-place process. Advantageously, the clean-in-place control module 112 is configured to optimize the first set of input parameters in real time. In other words, the clean-in-place control module 112 is configured to optimize the clean-in-place process in real time.

In one example, the processing unit 202 is configured to clean and filter the first set of input parameters by application of at least one of a data cleaning algorithm and a data filtering algorithm.

The clean-in-place control module 112 further causes the processing unit 202 to analyze the first set of input parameters by application of the plurality of machine learning models on the first set of input parameters.

The plurality of machine learning models is configured to analyze the first set of input parameters to generate a plurality of sets of input parameters. Each machine learning models of the plurality of machine learning models is configured to modify one or one or more input parameters of the first set of input parameters in a manner which is specific to the respective machine learning model. In otherwords, the plurality of machine learning models creates a plurality of sets of input parameters by analyzing the first set of input parameters.

The clean-in-place control module 112 further causes the processing unit 202 to generate a plurality of confidence scores for the plurality of machine learning models based on the first set of input parameters. A confidence score of a machine learning model is indicative of a probability with which the machine learning model correctly optimizes the first set of input parameters. The confidence score of the machine learning model is specific to the first set of input parameters. Thus, the plurality of connfidence scores is indicative of a probability with which each of the plurality of machine learning models correctly optimizes the first set of input parameters.

In one example, The clean-in-place control module 112 further causes the processing unit 202 to rank the plurality of machine learning models in a decreasing order of confidence scores by application of a sorting algorithm on the plurality of confidence scores and the plurality of machine learning models. Examples of the sorting algorithms include binary sorting algorithms and tree sorting algorithms. Furthermore, the clean-in-place control module 112 further causes the processing unit 202 to select at least one machine learning model which has a higher rank than other machine learning models of the plurality of machine learning models. Advantageously, the at least one machine learning model which has a highest confidence score in analysing the first set of input parameters is selected. Thus, the at least one machine learning model is selected in real-time based on the first set of input parameters received by the processingunit 202.

In another example, the clean-in-place control module 112 further causes the processing unit 202 to determine a highest confidence score among the plurality of confidence scores generated by the plurality of machine learning models based on the appplication of the sorting algorithm. The clean-in-place control module 112 further causes the processing unit 202 to select the at least one machine learning model from the plurality of machine learning model such that the selected at least one machine learning model has the determined highest confidence score. It is noted that a machine learning model with a highest confidence score has a highest probability of optimizing the first set of input parameters. Thus, advantageously, the clean-in-place control module 112 is configured to select, from the plurality of machine learning models, the at least one machine learning model which has the highest probability of correctly optimizing the first set of input parameters.

The clean-in-place control module 112 further causes the processing unit 202 to generate a second set of input parameters for the clean-in-place process based on application of the determined at least one machine learning model on the first set of input parameters. It is noted that the at least one machine learning model is configured to optimize the first set of input parameters. The second set of input parameters comprises an optimised version of the first set of input parameters. In another example, the at least one machine learning module is configured to modify the first set of input parameters based on one or more user preferences. In one example, the one or more user preferences comprises a user input which indicative of increasing one or more input parameters of the first set of input parameters. In such a case, the at least one machine learning models is configured to increase the one or more parameters of the first set of input parameters to generate the second set of input parameters. In other words, the at least one machine learning model is configured to modify one or more parameters of the first set of input parameters to generate the second set of input parameters. It is noted that, among the plurality of machine learning models, the at least one machine learning model has a highest probability of correctly optimizing the first set of input parameters. Thus, advantageously, the second set of input parameters comprises a correct and accurately optimized version of the first set of input parameters.

The clean-in-place control module 112 further causes the processing unit 202 to receive a user selection which is indicative of the one or more parameters, of the first set of input parameters, which are to be modified by the at least one machine learning algorithm. In such a case, the at least one machine learning model is configured to modify the user selected one or more parameters of the first set of input parameters to generate the second set of input parameters. Advantageously, the user is enabled to optimize the one or more parameters of the first set of input parameters based on the user selection.

The clean-in-place control module 112 further causes the processing unit 202 to display the second set of input parameters to a user. In one example, the processing unit 202 is configured to display the second set of input parameters on a display device such as a human machine interface or a smart phone.

The clean-in-place control module 112 further causes the processing unit 202 to simulate the cleaning-in-place process in a simulator based on the first set of input parameters to generate a first simulation instance. Examples of the simulators includes but is not limited to ASPEN plus, MATLAB, or a user generated simulation tool for simulating the cleaning-in-place process. The first simulation instance comprises information about the first set of input parameters and a first set of simulated output parameters. The first set of simulated output parameters is indicative of predicted values of a plurality of outputs of the clean-in-place process when the clean-in-place process is operated with the first set of input parameters.

The clean-in-place control module 112 further causes the processing unit 202 to generate a first set of simulated output parameters based on the first simulation instance. In one example, the first set of simulated output parameters comprises information about a predicted value of an amount of Megajoules (MJ) of energy consumed in the clean-in place process, when the clean-in-place process is executed according to the first set of input parameters. In another example, the first set of simulated output parameters comprises information about a predicted value of an amount of Water consumed in the clean-in-place process, when the clean-in-place process is executed according to the first set of input parameters. In another example, the first set of simulated output parameters comprises information about a predicted value of an amount of wastewater generated in the clean-in-place process, when the clean-in-place process is executed according to the first set of input parameters.

The clean-in-place control module 112 further causes the processing unit 202 to simulate the cleaning-in-place process in a simulator based on the second set of input parameters to generate a second simulation instance. The second simulation instance comprises information about the second set of input parameters and a second set of simulated output parameters. The second set of simulated output parameters is indicative of predicted values of a plurality of outputs of the clean-in-place process if the clean-in-place process is operated with the second set of input parameters.

In other words, the clean-in-place control module 112 further causes the processing unit 202 to generate a second set of simulated output parameters based on the second simulation instance. The clean-in-place control module 112 further causes the processing unit 202 to determine a difference between the first set of simulated output parameters and the second set of simulated output parameters. The clean-in-place control module 112 further causes the processing unit 202 to display the determined difference in an output device such as the one or more client devices 120A-N.

Advantageously, the clean-in-place control module 112 enables a user to visualize the difference between the first set of simulated output parameters and the second set of simulated output parameters. In other words, the user is enabled to visualize a set of possible outcomes when each of the first set and second set of input parameters are used to control the clean-in-place process. The clean-in-place control module 112 is further configured to compare the first set of simulated output parameters with at least one threshold. The clean-in-place control module 112 is configured to generate a user alert in a case where the first set of simulated output parameters is greater than the at least one threshold.

In one example, the output device is at least one of a human machine interface or a smart phone. The clean-in-place control module 112 is further causes the processing unit 202 to generate a plurality of user recommendations by application of a natural language processing algorithm on the generated second set of input parameters and the second set of simulated output parameters. The generated plurality of user recommendations is indicative of one or more recommendations to a user to control the clean-in-place process based on the second set of input parameters. Advantageously, the clean-in-place control module 112 is configured to analyze a large number of input parameters associated with the clean-in-place process and generates the plurality of comprehensive and accurate user recommendations to manage an execution of the clean-in-place process in the industrial plant 106.

In one example, the second set of simulated output parameters comprises information indicative of a predicted time for completion of the clean-in-place process if the the clean-in-place process is executed based on the second set of input parameters. Thus, advantageously, the clean-in-place control module 112 is configured to generate the second set of input parameters such that the predicted time for completion for the clean-in-place process is minimized. Thus, the clean-in-place control module 112 helps in optimizing the clean-in-place process, and there by optimizes functioning of the industrial plant 106.

In another example, the second set of input parameters comprises information associated with an optimized amount of cleaning agents used in the clean-in-place process. Advantageously, the clean-in-place control module 112 optimizes the amount of cleaning agents used in the clean-in-place process and thereby reduces wastage of the cleaning agents.

In yet another example, the second set of input parameters comprises information associated with an optimum frequency at which the clean-in-place process has to be performed in the industrial plant 106. Advantageously, the clean-in-place control module 112 optimizes a frequency at which the clean-in-place process, thereby optimizing water usage, chemical usage and energy usage in the industrial plant 106.

The clean-in-place control module 112 further causes the processing unit 202 to control the clean-in-place process in the industrial plant 106 based on the second set of input parameters to optimize the cleaning-in-place process. In one example, the clean-in-place process is controlled by adjusting, by the processing unit 202, a plurality of input parameters of the clean-in-place process, from a value indicated by the first set of input parameters, to a value indicated by the second set of input parameters. In one example, the first set of input parameters and the second set of input parameters comprises a parameter which is indicative of water used in the clean-in-place process. A value of the parameters in the first set of input parameters is 30 liters. A value of the parameter in the second set of input parameters is 15 liters. In such a case, the processing unit 202 is configured to reduce the parameter of the clean-in-place process from 30 liters to 15 liters.

The clean-in-place control module 112 further causes the processing unit 202 to receive a set of output parameters associated with the controlled clean-in-place process in the industrial plant 106. The clean-in-place control module 112 further causes the processing unit 202 to compare the second set of simulated output parameters with the set of output parameters. The clean-in-place control module 112 further causes the processing unit 202 to determine a difference between the second set of simulated output parameters and the set of output parameters based on the comparison. The clean-in-place control module 112 further causes the processing unit 202 to display the determined difference in an output device such as the one or more client devices 120A-N.

The clean-in-place control module 112 is configured to compare the difference with a threshold value. The threshold value is predefined by one or more users. In a case where the difference is greater than the threshold, then the clean-in-place control module 112 is configured to retrain the at least one machine learning model based on the first set of input parameters, the second set of input parameters, the second set of simulated output parameters, and the set of output parameters. In other words, the clean-in-place control module 112 is configured to determine an accuracy of the at least one machine learning model. Advantageously, in a case where the accuracy of the at least one machine learning model is lesser than a threshold, the clean-in-place control module 112 is configured to retrain the at least one machine learning model to provide better predictions of input parameters and simulated output parameters.

The clean-in-place control module 112 is further configured to display the set of output parameters, the second set of input parameters, and the second set of simulated output parameters on a display screen. In one example, the set of output parameters comprises consumption parameters associated with the clean-in-place process, such as a water consumption, an energy consumption, and an energy consumption in the clean-in-place process. In other words, the clean-in-place control module 112 is configured to display the the consumption parameters associated with the clean-in-place process. Advantageously, the clean-in-place control module 112 displays consumption analytics associated with the clean-in-place process.

The clean-in-place control module 112 further causes the processing unit 202 to receive a user input from a user. The user input is indicative of a user selected machine learning model of the plurality of machine learning models. The clean-in-place control module 112 further causes the processing unit 202 to generate a third set of input parameters for the clean-in-place process based on application of the user selected machine learning model on the first set of input parameters. The clean-in-place control module 112 further causes the processing unit 202 to control the clean-in-place process in the industrial plant 106 based on the third set of input parameters to optimize the cleaning-in-place cycle.

The communication interface 208 is configured for establishing communication sessions between the one or more client device 120A-N, and the industrial control system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the industrial control system 102, one or more client devices 120AN and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and described. The remainder of the construction and operation of the industrial control system 102 may conform to any of the various current implementation and practices known in the art.

FIG 3 is a block diagram of the clean-in-place control module 112, such as those shown in FIG 2, in which an embodiment of the present invention can be implemented. In FIG 3, a clean-in-place control module 112 comprises a request handler module 302, a machine learning model training module 304, an analysis module 306, a simulator module 308, a historical data database 310, a validation module 312 and a deployment module 314. FIG. 3 is explained in conjunction with FIG. 1 and FIG. 2.

The request handler module 302 is configured for receiving the request to control the clean-in-place process which is executed on the plurality of machine parts 108A-N. For example, the request is received from one of the one or more users external to the industrial environment 100 via the network connection 104. In alternative embodiment, the request is received from the one or the one or more client devices 120A-N via the network connection 104. The request handler module 302 is further configured to receive a plurality of input parameters and a plurality of output parameters associated with the clean-in-place process.

The machine learning model training module 304 is configured to train the plurality of machine learning models. The plurality of machine learning models are trained based on one or more user inputs received from one or more users. Each machine learning model of the plurality of machine learning module is trained based on a specific set of user preferences received from one or more users.

The analysis module 306 is configured for applying the plurality of machine learning models on the first set of input parameters to generate an optimized version of the first set of input parameters, such as the second set of input parameters.

The simulator module 308 is configured to simulate an execution of the clean-in-place process in the industrial plant 106. The simulator module 308 is configured to receive the plurality of input parameters of the clean-in-place process as input. The simulator module 308 is further configured to predict a plurality of simulated output parameters. The plurality of simulated output parameters comprises a prediction of one or more output parameters of the clean-in-place process, in a case where the clean-in-place process is executed based on the plurality of input parameters.

The historical data database 310 is configured to store a plurality of input parameters and a plurality of output parameters associated with a plurality of clean-in-place processes which have been executed in the industrial plant 106 in the past.

The validation module 312 is configured to compare the second set of simulated output parameters and the set of output parameters. The validation module 312 is further configured to validate the at least one machine learning model based on the comparison.

The deployment module 314 is configured for deploying the at least one machine learning model to control the clean-in-place process in the industrial plant 106.

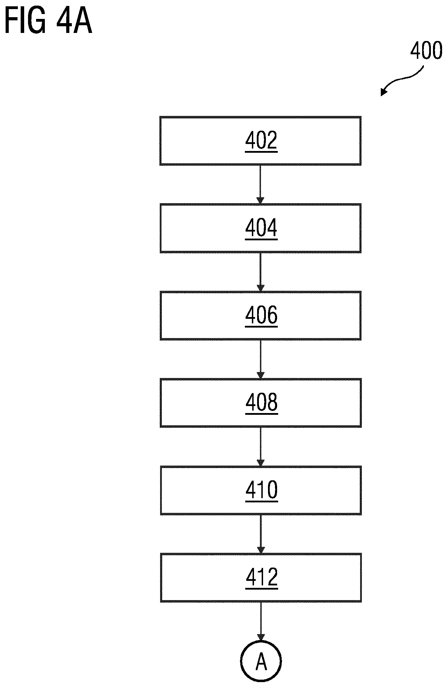

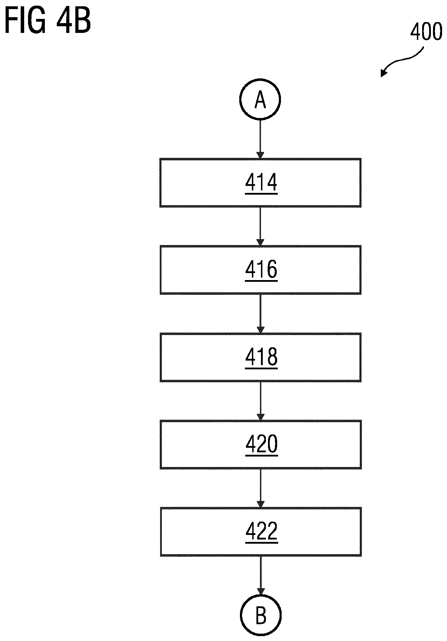

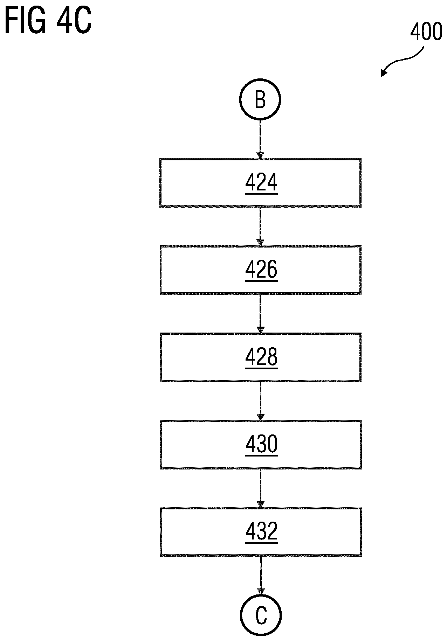

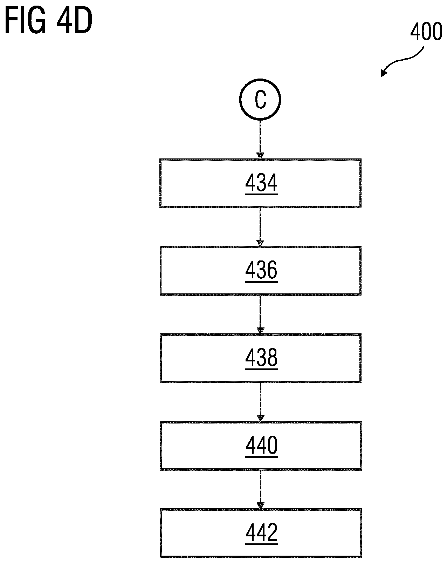

FIG 4A-D is a process flowchart illustrating an exemplary method 400 of controlling a clean-in-place process in an industrial plant 106. according to an embodiment of the present invention. FIG. 4A-D is explained in conjunction with FIGs. 1 to 3.

At step 402, the processing unit 202 is configured to train a plurality of machine learning models by analysis of the plurality of input parameters and the plurality of output parameters associated a plurality of clean-in-place processes in the industrial plant 106.

At step 404, the clean-in-place control module 112 causes the processing unit 202 to receive a first set of input parameters associated with a clean-in-place process in the industrial plant 106. In one example, the first set of input parameters comprises an amount of water used in the clean-in-place process, and a number of cleaning cycles in the clean-in-place process.

At step 406, the clean-in-place control module 112 causes the processing unit 202 to analyze the first set of input parameters by application of the plurality of machine learning models on the first set of input parameters. The plurality of machine learning models is configured to analyze the first set of input parameters to generate a plurality of sets of input parameters. Each machine learning models of the plurality of machine learning models is configured to modify one or one or more input parameters of the first set of input parameters in a manner which is specific to the respective machine learning model. In other words, the plurality of machine learning models creates a plurality of sets of input parameters by analyzing the first set of input parameters.

At step 408, the clean-in-place control module 112 further causes the processing unit 202 to generate a plurality of confidence scores for the plurality of machine learning models. Each confidence score of the plurality of confidence scores is associated with a specific machine learning model of the plurality of machine learning models. In one example, At step 410, the clean-in-place control module 112 further causes the processing unit 202 to rank the plurality of machine learning models in a decreasing order of confidence scores by application of a sorting algorithm on the plurality of confidence scores and the plurality of machine learning models. Examples of the sorting algorithms include binary sorting algorithms and tree sorting algorithms.

At step 412, the clean-in-place control module 112 further causes the processing unit 202 to select at least one machine learning model which has a higher rank than other machine learning models of the plurality of machine learning models.

In another example, the clean-in-place control module 112 further causes the processing unit 202 to determine a highest confidence score among the plurality of confidence scores generated by the plurality of machine learning models based on the appplication of the sorting algorithm. The clean-in-place control module 112 further causes the processing unit 202 to select the at least one machine learning model from the plurality of machine learning model such that the selected at least one machine learning model has the determined highest confidence score.

At step 414, the clean-in-place control module 112 further causes the processing unit 202 to generate a second set of input parameters for the clean-in-place process based on application of the determined at least one machine learning model on the first set of input parameters. It is noted that the at least one machine learning model is configured to optimize the first set of input parameters. The second set of input parameters comprises an optimised version of the first set of input parameters. In another example, the at least one machine learning module is configured to modify the first set of input parameters based on one or more user preferences. In one example, the one or more user preferences comprises a user input which indicative of increasing one or more input parameters of the first set of input parameters. In such a case, the at least one machine learning models is configured to increase the one or more parameters of the first set of input parameters to generate the second set of input parameters. In otherwords, the at least one machine learning model is configured to modify one or more parameters of the first set of input parameters to generate the second set of input parameters.

At step 416, the clean-in-place control module 112 further causes the processing unit 202 to receive a user selection which is indicative of the one or more parameters, of the first set of input parameters, which are to be modified by the at least one machine learning algorithm. In such a case, the at least one machine learning model is configured to modify the user selected one or more parameters of the first set of input parameters to generate the second set of input parameters.

At step 418, the clean-in-place control module 112 further causes the processing unit 202 to display the second set of input parameters to a user. In one example, the processing unit 202 is configured to display the second set of input parameters on a display device such as a human machine interface or a smart phone.

At step 420, the clean-in-place control module 112 further causes the processing unit 202 to simulate the cleaning-in-place process in a simulator based on the first set of input parameters to generate a first simulation instance. Examples of the simulators includes but is not limited to ASPEN plus, MATLAB, or a user generated simulation tool for simulating the cleaning-in-place process. The first simulation instance comprises information about the first set of input parameters and a first set of simulated output parameters. The first set of simulated output parameters is indicative of predicted values of a plurality of outputs of the clean-in-place process if the clean-in-place process is operated with the first set of input parameters.

At step 422, the clean-in-place control module 112 further causes the processing unit 202 to generate a first set of simulated output parameters based on the first simulation instance. In one example, the first set of simulated output parameters comprises information about a predicted value of an amount of Megajoules (MJ) of energy consumed in the clean-in place process, when the clean-in-place process is executed according to the first set of input parameters. In another example, the first set of simulated output parameters comprises information about a predicted value of an amount of Water consumed in the clean-in-place process, when the clean-in-place process is executed according to the first set of input parameters. In another example, the first set of simulated output parameters comprises information about a predicted value of an amount of wastewater generated in the clean-in-place process, when the clean-in-place process is executed according to the first set of input parameters.

At step 424, the clean-in-place control module 112 further causes the processing unit 202 to simulate the cleaning-in-place process in a simulator based on the second set of input parameters to generate a second simulation instance. The second simulation instance comprises information about the second set of input parameters and a second set of simulated output parameters. The second set of simulated output parameters is indicative of predicted values of a plurality of outputs of the clean-in-place process if the clean-in-place process is operated with the second set of input parameters.

At step 426, the clean-in-place control module 112 further causes the processing unit 202 to generate a second set of simulated output parameters based on the second simulation instance. At step 428, the clean-in-place control module 112 further causes the processing unit 202 to determine a difference between the first set of simulated output parameters and the second set of simulated output parameters.

The clean-in-place control module 112 further causes the processing unit 202 to display the determined difference in an output device such as the one or more client devices 120A-N. In one example, the output device is at least one of a human machine interface or a smart phone.

At step 430, the clean-in-place control module 112 further causes the processing unit 202 to control the clean-in-place process in the industrial plant 106 based on the second set of input parameters to optimize the cleaning-in-place process. In one example, the clean-in-place process is controlled by adjusting, by the processing unit 202, a plurality of input parameters of the clean-in-place process, from a value indicated by the first set of input parameters, to a value indicated by the second set of input parameters. In one example, the first set of input parameters and the second set of input parameters comprises a parameter which is indicative of water used in the clean-in-place process. A value of the parameters in the first set of input parameters is 30 liters. A value of the parameter in the second set of input parameters is 15 liters. In such a case, the processing unit 202 is configured to reduce the parameter of the clean-in-place process from 30 liters to 15 liters.

At step 432, the clean-in-place control module 112 further causes the processing unit 202 to receive a set of output parameters associated with the controlled clean-in-place process in the industrial plant 106. The set of output parameters are generated from a distributed control system such as the industrial control system 102. In another example, the set of output parameters are received from a plurality of users who are connected to the industrial control system 102 via the one or more client devices 120A-N.

At step 434, the clean-in-place control module 112 further causes the processing unit 202 to compare the second set of simulated output parameters with the set of output parameters. At step 436, the clean-in-place control module 112 further causes the processing unit 202 to determine a difference between the second set of simulated output parameters and the set of output parameters based on the comparison. At step 438, the clean-in-place control module 112 further causes the processing unit 202 to display the determined difference in an output device such as the one or more client device.

At step 440, the clean-in-place control module 112 further causes the processing unit 202 to receive a user input from a user. The user input is indicative of a user selected machine learning model of the plurality of machine learning models.

At step 442, the clean-in-place control module 112 further causes the processing unit 202 to generate a third set of input parameters for the clean-in-place process based on application of the user selected machine learning model on the first set of input parameters. The clean-in-place control module 112 further causes the processing unit 202 to control the clean-in-place process in the industrial plant 106 based on the third set of input parameters to optimize the cleaning-in-place process.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein.

The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference sign list:

1. an industrial environment 100
2. an engineering system 102
3. one or more client devices 120A-N
4. a network 104
5.plurality of machine parts 108A-N
6. a platform 110
7. a clean-in-place control module 112
8. a server 114
9. a network interface 116
10. a database 118
11. a processor(s) 202
12. an accessible memory 204
13. a storage unit 206
14. a communication interface 208
15. an input-output unit 210
16. a network interface 212
17. a bus 214
18. an integrated development environment (IDE) 216
19. a request handler module 302,
20. a machine learning model training module 304,
21. an analysis module 306,
22. a simulator module 308,
23. a historical data database 310,
24. a validation module 312
25. a deployment module 314

## Claims

1. A method of controlling a clean-in-place process in an industrial plant (106), the method comprising:
receiving, by the processing unit (202), a first set of input parameters associated with a clean-in-place process in the industrial plant (106);
analyzing, by the processing unit (202), the first set of input parameters by application of a plurality of machine learning models on the first set of input parameters;
generating, by the processing unit (202), a plurality of confidence scores for the plurality of machine learning models, wherein each confidence score of the plurality of confidence scores is associated with a specific machine learning model of the plurality of machine learning models;
determining, by the processing unit (202), at least one machine learning model from the plurality of machine learning models based on the generated plurality of confidence scores;
generating, by the processing unit (202), a second set of input parameters for the clean-in-place process based on application of the determined at least one machine learning model on the first set of input parameters; and
controlling, by the processing unit (202), the clean-in-place process in the industrial plant (106) based on the second set of input parameters.

2. The method according to claim 1, further comprising:
training, by the processing unit (202), each machine learning model of the plurality of machine learning models based on information associated with a plurality of parameters of a plurality of cleaning-in-place processes in the industrial plant (106).

3. The method according to claims 1 and 2, wherein
a. each clean-in-place process of the plurality of clean-in-place processes is associated with a specific chemical substance of a plurality of chemical substances of the industrial plant (106), and
b. a specific clean-in-place process, of the plurality of clean-in-place processes, is configured to clean a specific chemical substance from one or more vessels in the industrial plant (106).

4. The method according to claims 2 and 3, further comprising displaying, by the processing unit (202), the second set of input parameters to a user.

5. The method according to claims 1 to 4, wherein determining at least one machine learning model from the plurality of machine learning models based on the generated plurality of confidence scores comprises:
determining, by the processing unit (202), a highest confidence score among the plurality of confidence scores generated by the plurality of machine learning models; and
selecting, by the processing unit (202), the at least one machine learning model from the plurality of machine learning models, wherein the determined at least one machine learning model is associated with the determined highest confidence score.

6. The method according to claim 1, further comprising:
simulating, by the processing unit (202), the cleaning-in-place process in a simulator based on the first set of input parameters to generate a first simulation instance;
generating, by the processing unit (202), a first set of simulated output parameters based on the first simulation instance;
simulating, by the processing unit (202), the cleaning-in-place process in the simulator based on the second set of input parameters to generate a second simulation instance;
generating, by the processing unit (202), a second set of simulated output parameters based on the second simulation instance;
determining, by the processing unit, a difference between the first set of simulated output parameters and the second set of simulated output parameters; and
displaying, by the processing unit (202), the determined difference in an output device.

7. The method according to claim 6, further comprising:
receiving from a server, by the processing unit (202), a set of output parameters associated with the clean-in-place process in the industrial plant;
comparing, by the processing unit (202), the second set of simulated output parameters with the set of output parameters;
determining, by the processing unit, a difference between the second set of simulated output parameters and the set of output parameters based on the comparison; and
displaying, by the processing unit (202), the determined difference in an output device.

8. The method according to claim 7, further comprising:
receiving, by the processing unit (202), a user input from a user, wherein the user input is indicative of a user selected machine learning model of the plurality of machine learning models;
generating, by the processing unit (202), a third set of input parameters for the clean-in-place process based on application of the user selected machine learning model on the first set of input parameters; and
controlling, by the processing unit (202), the clean-in-place process in the industrial plant based on the third set of input parameters.

9. The method according to claim 1, wherein each machine learning model of the plurality of machine learning models is configured to optimize one or more output parameters of the clean-in-place process.

10. The method according to claim 1, wherein each machine learning model of the plurality of machine learning models is one of a convoluted neural network and a deep neural network.

11. An industrial control system (102) for optimizing a clean-in-place process in an industrial plant, wherein the industrial control system (102) comprises:
a processing unit (202); and
a memory (204) coupled to the processing unit (202), wherein the memory comprises a clean-in-place control module (112) stored in the form of machine-readable instructions executable by the one or more processor(s), wherein the clean-in-place control module (112) is capable of performing a method according to any of the claims 1-10.

12. An industrial environment (100) comprising:
an industrial control system (102) as claimed in claim 11;
a industrial plant (106) comprising one or more physical components; and
a one or more client devices(120A-N) communicatively coupled to the industrial control system (102) via a network (104), wherein the industrial control system (102) is configured to perform a method according to any of the claims 1 to 10.

13. A computer-program product, having machine-readable instructions stored therein, that when executed by a processing unit (202), cause the processors to perform a method according to any of the claims 1-10.
